(19) Europäisches Patentamt
European Patent Office
Office européen des brevets

(11) EP 1 308 454 B1

(12) **EUROPEAN PATENT SPECIFICATION**

(45) Date of publication and mention of the grant of the patent:
**01.06.2005 Bulletin 2005/22**

(51) Int Cl.[7]: **C07F 15/00**

(21) Application number: **03000863.5**

(22) Date of filing: **18.10.1996**

(54) **Process of preparing platinum compound**

Verfahren zur Herstellung von Platin Verbindungen

Procédé de préparation de composés du platine

(84) Designated Contracting States:
**BE CH DE DK ES FR GB IT LI NL PT SE**

(30) Priority: **10.04.1996 JP 8695496**

(43) Date of publication of application:
**07.05.2003 Bulletin 2003/19**

(62) Document number(s) of the earlier application(s) in accordance with Art. 76 EPC:
**96830537.5 / 0 801 070**

(73) Proprietor: **DEBIOPHARM S.A.**
**1000 Lausanne 9 (CH)**

(72) Inventors:
- **Taniuchi, Jun-ichi, Tanaka Kikinzoku Kogyo K. K. Tokyo (JP)**
- **Nakanishi, Chihiro, Tanaka Kikinzoku Kogyo K. K. Tokyo (JP)**
- **Ohnishi, Yuko, Tanaka Kikinzoku Kogyo K. K. Tokyo (JP)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 147 926**
**EP-A- 0 376 076**
**EP-A- 0 567 438**
**US-A- 4 169 846**
**US-A- 4 175 133**

- **PATENT ABSTRACTS OF JAPAN vol. 0186, no. 80, 21 December 1994 (1994-12-21) & JP 06 271593 A (TANAKA KIKINZOKU KOGYO K.K.)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 308 454 B1

## Description

### Background of the Invention

The present invention relates to a process of preparing cis-oxalato(trans-ℓ-1,2-cyclohexanediamine) Pt(II) which is a bivalent platinum complex useful as raw material of a carcinostatic substance, especially to a process of preparing cis-oxalato(trans-ℓ-1,2-cyclohexanediamine) Pt(II) at a high yield with producing substantially no by-products.

Cis-oxalato(trans-ℓ-1,2-cyclohexanediamine) Pt(II) (hereinafter also referred to as "oxalato complex") having Formula II, the steric configuration of 1,2-cyclohexanediamine being trans-ℓ, and R having Formula III, is obtained by converting trans-ℓ-1,2-cyclohexanediamine into cis-dichloro(trans-ℓ-1,2-cyclohexanediamine) Pt(II) through a reaction with potassium tetrachloroplatinate (II), reacting the dichloro complex with silver nitrate to

Formula I

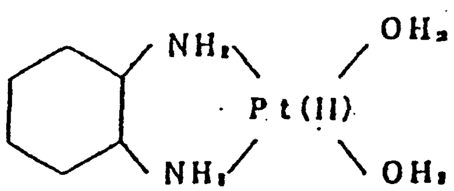

Formula II

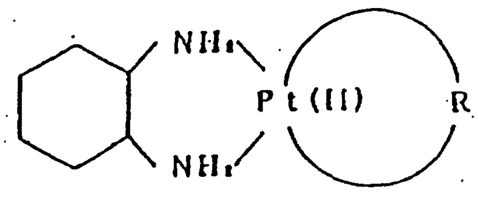

Formula III

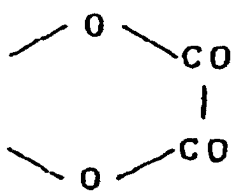

obtain cis-diaquo(trans-ℓ-1,2-cyclohexanediamine) Pt(II) (hereinafter also referred to as "diaquo complex) having Formula I, the steric configuration of 1,2-cyclohexanediamine being trans-ℓ, and then adding oxalic acid or the oxalate thereto, as disclosed in EP-A-567 438, US-A-4 169 846 or JP-A-05-301 884.

While a high purity product with a small amount of by-products can be obtained when the reaction between the diaquo complex and the oxalic acid is completed in such a short period of time as two hours in the above process of preparation, its yield is disadvantageously lowered to 50 to 60 %. Although, on the other hand, the yield may be elevated to about 70 % when the reaction time is extended to about 24 hours, an amount of by-products or impurities produced during the reaction process increases with the reaction time so that the desired oxalato complex is contaminated with the impurities to lower its purity.

Medicines such as a carcinostatic substance are required to have a high purity. When they are contaminated with even a slight amount of impurities, not only activities of the medicines are lowered to the extent of the contaminated impurities but also further decrease of the activities may be invited by the impurities and, at worst, the impurities possess a toxic character so that the administration to a patient may produce an adverse effect.

Since not only the labor and cost of the separation and removal of impurities are large and high but also part of the desired product may be lost during the above separation and removal if a final product is contaminated with the impurities, it is most desirable to maintain the contamination of the impurities into the desired product at minimum.

Accordingly, the formation of impurities is depressed by shortening a reaction time sacrificing the elevation of a yield. However, it is naturally desirable to intend the elevation of the yield without the contamination with the impurities.

### Summary of the Invention

In view of the above drawbacks, the object of the present invention is to provide a process of preparing a

target high purity platinum complex with a relatively high yield while depressing the contamination of impurities by means of relatively simple procedures.

The aspect of the present invention is a process of preparing a platinum complex which comprises reacting cis-[diaquo(trans-ℓ-1,2-cyclohexanediamine) Pt(II)] having Formula I, the steric configuration of 1,2-cyclohexanediamine being trans-ℓ, with oxalic acid or an oxalate derivative to synthesize cis-oxalato(trans-ℓ-1,2- cyclohexanediamine) Pt(II) having Formula II, the steric configuration of 1,2-cyclohexanediamine being trans-ℓ, and R having Formula III, characterized in that: at the time of adding the oxalic acid and/or the oxalate derivative, pH is adjusted to be between 3.0 and 6.0 by adding an alkali solution.

In accordance with the aspect of the present invention, the depression of dissociation of an oxalate ion due to the low pll which has been an inhibition factor of a conventional reaction between a diaquo complex and an oxalate ion may be dissolved by shifting the pH range of a solution to the range in which the dissociation of the oxalate ion occurs at a satisfactory level by means of adding an alkali solution.

Accordingly, the degree of dissociation of the oxalic acid is elevated to produce a large amount of the oxalate ion so as to promote the reaction between the diaquo complex and the oxalate enabling to synthesize a target oxalato complex in a relatively short period of time.

When pH is too low in this case, sufficient dissociation of the oxalic acid cannot be obtained, and while pH is too high, the formation of a poly-complex is accelerated. Accordingly, the promotion of the reaction and the depression of the formation of the poly-complex are achieved by shifting the pll of the solution to a range of 3.0 to 6.0 by means of the addition of the alkali solution in the present invention.

However, in this pH range, if the reaction promotion and the depression of the formation of the poly-complex can be attained to some degree, these may not achieved to sufficiently satisfactory degree. In order to obtain the sufficient degree of the reaction promotion and of the depression of the poly-complex formation, it is desirable that the pH range is made to be 4.0 to 5.0 by the alkali addition.

As the above alkali solution, a potassium hydroxide solution, a sodium hydroxide solution and a lithium hydroxide solution are employable, and the addition of the alkali solution achieves the promotion of the reaction and the depression of the formation of the poly-complex to synthesize an oxalato complex at a high yield.

Detailed Description of the Invention

In the aspect of the present invention, the characteristic feature is the addition of the alkali solution when the target oxalato complex of Formula II is synthesized by reacting the diaquo platinum complex of Formula I with oxalic acid or the oxalato complex.

Since the aqueous solution of the diaquo complex before the addition of the oxalic acid or the like is strongly acidic (below pll 1) so that hydrogen concentration is high. the degree of dissociation of the oxalic acid which is a weak acid is low even when the oxalic acid is added. Since, accordingly, the concentration of the oxalate ion in the aqueous solution is low, it is conjectured that the rate of a ligand exchange reaction between a water molecule coordinated to the diaquo complex and the oxalate ion in the aqueous solution is slow so that the oxalato complex which is the target platinum complex cannot be synthesized at a high yield.

The present inventors have conducted a series of experiments under a hypothesis that in order to promote the coordination exchange reaction between the diaquo complex and the oxalic acid or the oxalate derivative, the degree of the dissociation of the oxalic acid or the oxalate derivative is elevated to increase the concentration of the oxalate ion in the above aqueous solution.

In order to increase the oxalate ion concentration, the pH of the above aqueous solution may be elevated. The increase of the pH by the addition of the alkali solution in accordance with an ordinary method have been attempted so as to enable the synthesis of the target oxalato complex having a high purity at a high yield.

The amount of the alkali solution added is so adjusted that the pH range of the aqueous solution becomes between 3.0 and 6.0. The reasons why the pH range is restricted thereto are that a sufficient reaction promoting effect cannot be obtained below pH 3.0 while the formation of the poly-complex may occur over pH 6.0. Although, even in this range, the above reaction promotion and the depression of the formation of the poly-complex can be attained to some degree, they are not sometimes attained to sufficiently satisfactory degree. In order to sufficiently attain these, the pH range is desirably made between 4.0 and 5.0.

The alkali solution may be added to the aqueous solution at any time before or after the addition of the oxalate addition or simultaneously therewith. The concentration of the alkali solution is preferably between 10 and 15 %.

A similar yield to that conventionally obtained by the reaction between the diaquo complex and the oxalate ion for 24 hours can be obtained by the alkali addition through a two-hour reaction. The formation of impurities and the coloration of the product can be depressed depending on the degree of the reduction of the reaction time to enable to obtain the high purity target oxalato complex at a high yield.

Examples

Example 1

After 562.5 g of potassium tetrachloroplatinate and 154.8 g of trans-ℓ-1,2-cyclohexanediamine were dissolved in 3.5 ℓ of water and mixed. cake-like cis-[dichloro(trans-ℓ-1,2-cyclohexanediamine) Pt(II) was obtained without recrystallization at a yield of 96 %. This was suspended in 5.7 ℓ of water to which was added 2.8 ℓ of water in which 442.0 g of silver nitrate was dissolved. After the stirring in dark for 24 hours at room temperature, the precipitate of silver chloride produced was removed by means of filtration.

Thereafter, 164.0 g of oxalic acid was added to this filtrate, and further a potassium hydroxide aqueous solution was added while measuring the pH of the said filtrate until the pH of the solution became about 4.5. After the addition and the reaction for two hours at room temperature, a crude crystal of the target cis-oxalato(trans-ℓ-1,2-cyclohexanediamine) Pt(II) (oxalato complex) could be obtained at a yield of 71.5 %. Then, after the crude crystal was dissolved in hot water and filtered, it was cooled to room temperature. The precipitated white crystal was collected and washed with a small amount of water. The obtained crystal was dried and the target white platinum crystal containing little impurities as mentioned later was obtained.

Comparative Example 1

The oxalato complex was synthesized in the same conditions as those of Example 1 except that the potassium hydroxide aqueous solution was not added, and the crude crystal was obtained at a yield of 58.5 %. This crude crystal was refined similarly to Example 1 to obtain a white platinum crystal containing little impurities as mentioned later.

Comparative Example 2

The oxalato complex was synthesized in the same conditions as those of Example 1 except that the reaction time after. the addition of the oxalic acid was 24 hours, and the crude crystal was obtained at a yield of 71.2 %. This crude crystal was refined similarly to Example 1 to obtain a light brown crystal.

The purities of the oxalato complexes of Example 1 and Comparative Examples 1 and 2 were determined in accordance with an absolute analytical curve method employing a high speed liquid chromatography (HPLC) method.

While known amounts of an unreacted component standard to be considered as an impurity were stepwise introduced, an analytical curve was obtained by measuring peak areas of its chromatogram and plotting the amounts of the components on a cross axis and the peak areas on a vertical axis. Then, the oxalato complexes of Example and Comparative Examples were subjected to HPLC in the same-conditions, and the amounts of the components to be detected in the samples were determined from the respective peak areas employing the analytical curve, and their contents were calculated.

The operation conditions of the chromatography were as follows.

Chromatography Operation Conditions 1:

Detector: Ultraviolet absorption photometer
Column: A stainless steel tube having an inner diameter of about 4.6 mm and a length of 15 cm was packed with octadecylsilylated silica gel having a particle size of 5 to 10 µm.
Column temperature: 40 °C
Mobile phase: Water - ethanol mixed solution (97:3)
Flow rate: 0.7 mm/min.

Chromatography Operation Conditions 2:

Mobile phase: Water - ethanol mixed solution (85:15)
(The other conditions were the same as those of Conditions 1)

Chromatography Operation Conditions 3:

Mobile phase: Water - ethanol mixed solution (40:60)
(The other conditions were the same as those of Conditions 1)

TABLE 1

| | Relative Retention Time fR | Purity Test Content (%) | | | Chromato Condition |
|---|---|---|---|---|---|
| | | Ex.1 | Comp.1 | Comp.2 | |
| cis-oxalato(trans-l-1,2-cyclohexamediamine) Pt(II) | 1.00 | 100.00 | 100.00 | 99.95 | 1, 2 |
| cis-dichloro(trans-l-1,2-cyclohexanediamine)Pt (II) | 0.92 | 0 | 0 | 0.05 | 1 |
| cis-monochloro(trans-l-1,2-cyclohexanediamine)Pt (II) | 0.87 | 0 | 0 | 0.04 | 2 |
| cis-diaquo(trans-l-1,2-cyclohexanediamine)Pt (II) nitrate | 0.82 | 0 | 0 | 0.06 | 3 |

The contents of the target product and the impurities in accordance with the absolute analytical curve method were as summarized in Table 1.

The silver impurity contained in the oxalato complexes synthesized in accordance with the above procedures was measured by an atomic absorption method, and the chlorine impurity was measured by an oxygen flask combustion potentiometric titration method.

| Atomic Absorption Operation Conditions: | |
|---|---|
| Employed gas | Combustible gas; Acetylene<br>Combustion supporting gas: Air |
| Lamp | Silver hollow cathode lamp |
| Wavelength | 328.1 nm |

A purity test method in accordance the atomic absorption method was conducted in accordance with a standard addition method. That is, three sample solutions of the same volume were taken. Standard solutions were added to the respective sample solutions so that the element to be detected was stepwise contained in the three sample solutions, and a solvent was added to the three solutions for making the respective volumes constant. The absorbances of the respective solutions were measured, the amounts (concentrations) of the standard element added were plotted on a cross axis and the absorbances were plotted on a vertical axis. A line obtained by the plottings was extended, and the amounts of the element to be detected (concentration as a silver atom) were determined by distances from an intersection with the cross axis to the origin point.

| Oxygen Flask Combustion Potentiometric Titration Conditions: | |
|---|---|
| Oxygen flow rate | 200 ml/min |
| Argon flow rate | 250 ml/min |
| Electric furnace temperature | 850 to 950 °C |
| End point potential | 293 mV |
| Titration current | 1.0 mA |

The chlorine content (chlorine concentration) was calculated based on the following equation.

$$\text{Chlorine concentration (ppm)} = \text{[measured value } (\mu g) \times 1000] / [\text{sample amount (mg)} \times \text{recovery rate}]$$

The silver impurity amounts and the chlorine impurity amounts thus obtained were summarized in Table 2.

In both Tables 1 and 2, the detection of the impurity amount below about 0.04 % was impossible due to measurement accuracy, and accordingly the purity of the target product over 99.96 % was shown to be 100 %.

TABLE 2

| Number of Measurement | Example 1(ppm) | | Comp. Ex.1 (ppm) | | Comp. Ex.2 (ppm) | |
|---|---|---|---|---|---|---|
| | Ag | Cl | Ag | Cl | Ag | Cl |
| 1 | 0.2 | 1.2 | 0.3 | 1.4 | 0.6 | 3.0 |
| 2 | 0.2 | 1.0 | 0.3 | 1.1 | 0.5 | 2.6 |
| 3 | 0.3 | 1.4 | 0.3 | 1.3 | 0.5 | 3.1 |
| 4 | 0.2 | 1.3 | 0.2 | 1.0 | 0.6 | 2.9 |

Example 2

The oxalato complex was synthesized in the same conditions as those of Example 1 except that the addition of the potassium hydroxide was continued until the pH reached to 3.0. An yield of the oxalato complex obtained was 59.5 %.

Example 3

The oxalato complex was synthesized in the same conditions as those of Example 1 except that the addition of the potassium hydroxide was continued until the pH reached to 6.0. An yield of the oxalato complex obtained was 66.5 %, and a small amount of the poly-complex was observed.

**Claims**

1. A process of preparing a platinum complex which comprises reacting cis-[diaquo(trans-ℓ-1,2-cyclohexanediamine) Pt(II)] having Formula I, the steric configuration of 1,2-cyclohexanediamine being trans-ℓ), with oxalic acid or an oxalate derivative to synthesize cis-oxalato(trans-ℓ-1,2-cyclohexanediamine) Pt(II) having Formula II, the steric configuration of 1,2-cyclohexanediamine being trans-ℓ, and R having Formula III, **characterized in that**:

    at the time of adding the oxalic acid and/or the oxalate derivative, pH is adjusted to be between 3.0 and 6.0 by adding an alkali solution.

Formula I

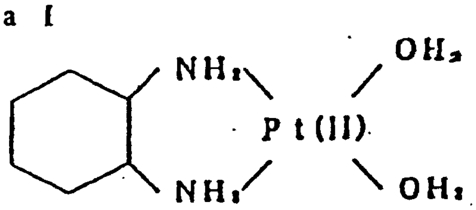

Formula II

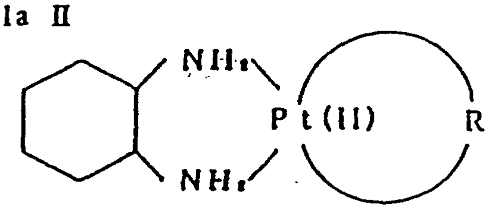

Formula III

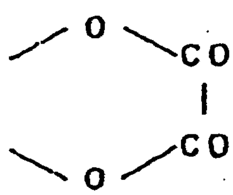

2. The process as claimed in Claim 1, wherein pH is adjusted between 4.0 and 5.0.

3. The process as claimed in Claim 1, wherein the alkaline solution is one of a potassium hydroxide solution, a sodium hydroxide solution and a lithium hydroxide solution.

## Patentansprüche

1. Verfahren zur Herstellung eines Platinkomplexes, welches umfasst: Umsetzung von cis-[Diaqua(trans-ℓ-1,2-cyclohexandiamin) Pt(II)] der Formel I, wobei die sterische Konfiguration des 1,2-Cyclohexandiamins trans-ℓ ist, mit Oxalsäure oder einem Oxalatderivat, um cis-Oxalato(trans-ℓ-1,2-cyclohexandiamin) Pt(II) der Formel II zu synthetisieren, wobei die sterische Konfiguration des 1,2-Cyclohexandiamins trans-ℓ ist, und R die Formel III aufweist, **dadurch gekennzeichnet, dass** zum Zeitpunkt der Zugabe der Oxalsäure und/oder des Oxalatderivate der pH durch Zugabe einer Alkalilösung eingestellt wird, zwischen 3,0 und 6,0 zu sein.

Formel I

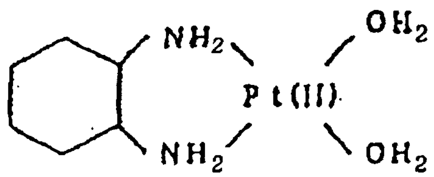

Formel II

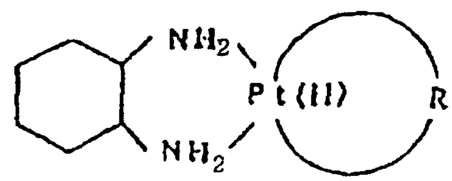

Formel III

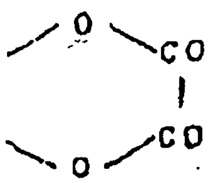

2. Verfahren nach Anspruch 1, wobei der pH zwischen 4,0 und 5,0 eingestellt wird.

3. Verfahren nach Anspruch 1, wobei die Alkalilösung eine aus einer Kaliumhydroxidlösung, Natriumhydroxidlösung und Lithiumhydroxidlösung ist.

## Revendications

1. Procédé de préparation d'un complexe de platine qui comprend le fait de faire réagir du cis-[diaquo(trans-ℓ-1,2-cyclohexanediamine)Pt(II)] ayant la formule I, la configuration stérique de la 1,2-cyclohexanediamine étant trans-ℓ avec de l'acide oxalique ou un dérivé oxalate pour synthétiser du cis-oxalato(trans-ℓ-1,2-cyclohexanediamine)Pt (II) ayant la formule II, la configuration stérique de la 1,2-cyclohexanediamine étant trans-ℓ, et R ayant la formule III, **caractérisé en ce que**, au moment de l'ajout de l'acide oxalique et/ou du dérivé oxalate, le pH est réglé pour être entre 3,0 et 6,0 en ajoutant une solution alcaline.

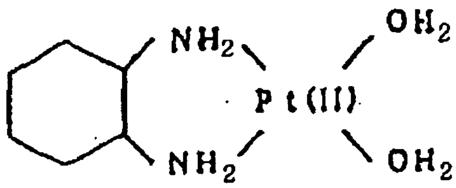

Formule I

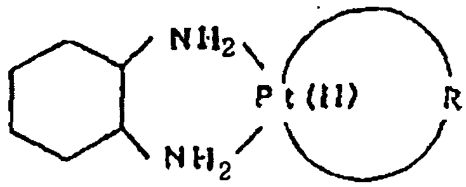

Formule II

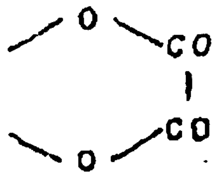

Formule III

2. Procédé selon la revendication 1, dans lequel le pH est réglé entre 4,0 et 5,0.

3. Procédé selon la revendication 1, dans lequel la solution alcaline est une solution d'hydroxyde de potassium, une solution d'hydroxyde de sodium ou une solution d'hydroxyde de lithium.